# EUROPEAN PATENT SPECIFICATION

(11) **EP 2 916 163 B1**
(45) Date of publication and mention of the grant of the patent: **03.05.2023**
(21) Application number: 15157744.2
(22) Date of filing: 05.03.2015
(51) Int. Cl.: G02B 27/48

(54) **Laser light source device and projection display apparatus**
Laserlichtquellenvorrichtung und Projektionsanzeigevorrichtung
Dispositif de source de lumière et appareil d'affichage par projection

(30) Priority: 07.03.2014 JP 2014045439
(43) Date of publication of application: 09.09.2015
(73) Proprietor: Ricoh Company, Ltd., Tokyo 143-8555 (JP)
(72) Inventor: Murai, Toshiharu, Tokyo 143-8555 (JP); Fujita, Kazuhiro, Tokyo 143-8555 (JP); Takahashi, Tatsuya, Tokyo 143-8555 (JP); Nishimori, Takehiro, Tokyo 143-8555 (JP)
(74) Representative: Marks & Clerk LLP

(56) References cited:
- EP-A2- 2 104 364
- EP-A2- 2 624 051
- WO-A1-2010/145773
- US-A1- 2005 248 737
- US-A1- 2010 328 610
- US-A1- 2012 038 892

## Description

### BACKGROUND

### Technical Field

Example embodiments of the present invention relate to a laser light source device and a projection display apparatus.

### Background Art

In recent years, projection display apparatuses become widespread that irradiate the image displayed on an image display element with the illumination light emitted from a laser light source device and project the light modulated by the image upon magnifying it by a projection optical system.

The image display element may be a transmission liquid crystal panel, a reflex liquid crystal panel, or a light valve such as a digital micromirror device (DMD).

As the size of the image to be projected increases, a large amount of illumination light is required to irradiate the image display element. For example, JP-2012-141581-A discloses combining a plurality of laser beams to form a laser-beam bundle, as a method of obtaining such a large amount of laser light.

As known in the art, a laser beam is coherent and has high energy density. Because such a laser-beam bundle obtained by combining a plurality of laser beams has very high energy density, such a laser-beam bundle may become harmful when leaked directly to the outside.

In order to deal with such possible harm, for example, JP-2012-002371-A discloses the use of a homogenizer, in a laser light source device using a laser-beam bundle, to remove or reduce the coherence of laser light.

However, even if such a homogenizer is used, the homogenizer may be damaged or displaced from the position where it should be. In such cases, a coherent laser-beam bundle may leak to the outside.

US2010/0328610A discloses bundling multiple laser beams using an array of reflective prisms and an integrator such as a fly's eye integrator or integrator bar. Each laser beam is sensed individually by a respective sensor of the beam partially reflected from a beam splitter. After the homogenisation, the overall intensity of the beam is measured and, depending on the measurement outcome, controlled to be within a certain corridor.

EP2624051A discloses a bundle of laser beams passing through a diffusion member to render it safer to the human eye, which is then split and fed to a power monitor device to stabilise the outputs of different groups of laser diode sources over time.

US2012/0038892A discloses bundling multiple laser beams using an array of reflective prisms and passing the bundle through an integrator to a spatial light modulator (SLM) of a projection system. Between the integrator and the SLM, a partially reflective mirror branches off some of the light to a colour control system.

EP2104364A discloses red, green and blue lasers whose beams are combined for projection, and a beam-splitter for diverting the combined beam to an array of photosensors for determining the position on a projection plane corresponding to the light-receiving surface of the array. Another beam-splitter, adjacent the lasers, feeds their outputs to a power detector.

The invention is in the device of claim 1.

According to one aspect of the present invention, a laser light source device is provided capable of preventing a coherent laser-beam bundle from leaking to the outside.

### BRIEF DESCRIPTION OF THE SEVERAL VIEWS OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 illustrates a laser light source device according to an example embodiment of the present invention.
FIG. 2 is a diagram of a photosensor according to an example embodiment of the present invention.
FIG. 3 illustrates an example of the configuration of a controller according to an example embodiment of the present invention.
FIG. 4 illustrates the states of various kinds of signals in a controller, according to an example embodiment of the present invention.
FIGS. 5A and 5B illustrate the states of the incident light on a photosensor in a normal state and an abnormal state, respectively, according to an example embodiment of the present invention.
FIG. 6 illustrates another example of the configuration of a controller according to an example embodiment of the present invention.
FIG. 7 illustrates a laser light source device according to another example embodiment of the present invention.
FIG. 8 illustrates a fluorescent wheel used in the example of figure 7.
FIG. 9 illustrates a laser light source device according to a different example embodiment of the present invention.
FIG. 10 illustrates a fluorescent wheel for the device of figure 9.
FIG. 11 illustrates a laser light source device according to another different example embodiment of the present invention.
FIG. 12 illustrates a mirror wheel for the source of figure 11.
FIG. 13 illustrates a fluorescent wheel for the source of figure 11.
FIGS. 14A and 14B illustrate projection display apparatuses according to an example embodiment of the present invention.

The accompanying drawings are intended to depict exemplary embodiments of the present disclosure.

The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected

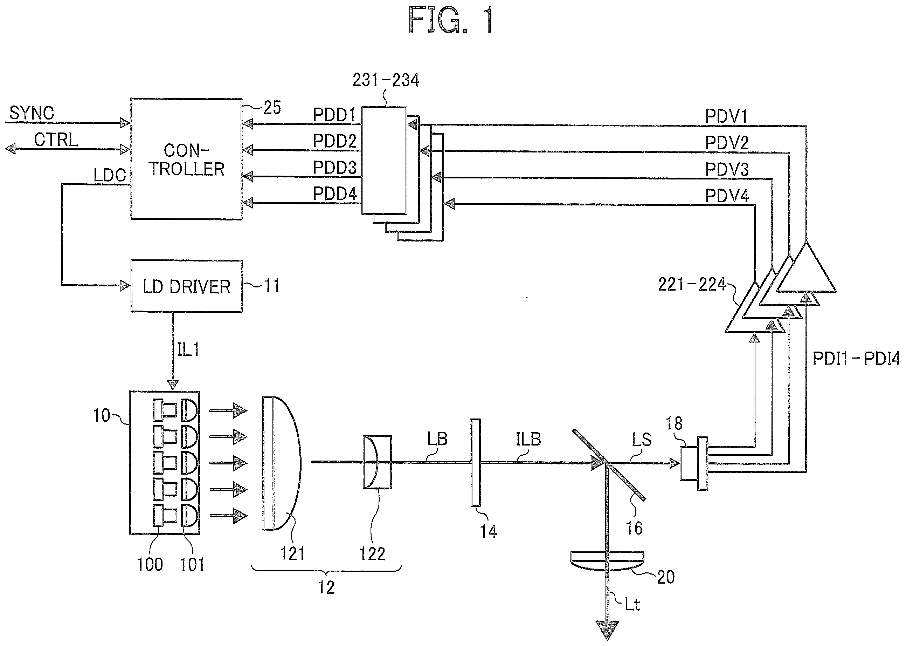

Example embodiments of the present invention are described below. FIG. 1 schematically illustrates a laser light source device according to an example embodiment of the present invention.

In FIG. 1, the laser light source device includes a laser diode (LD) module 10, an LD driver 11, and a beam-combining optical system 12.

Moreover, the laser light source of FIG. 1 includes a homogenizer 14, a beam splitter 16, a photosensor 18, and a light-emission optical system 20.

Further, the laser light source of FIG. 1 includes amplifiers 221 to 224, analog-to-digital converters (ADC) 231 to 234, and a controller 25.

The LD module 10 includes a plurality of laser diodes (LDs) (e.g., semiconductor lasers) 100, and collimator lenses 101 that are provided for the respective LDs 100.

The LDs 100 and the collimator lenses 101 are arranged at prescribed positions of a substrate in an organized manner, and each of the LDs 100 flashes as driven by the LD driver 11. More specifically, when each of the LDs 100 flashes as driven by the LD driver 11, the laser beam emitted from each of the LDs 100 is collimated by the corresponding collimator lens 101.

The collimated laser beams as described above are parallel to each other, and enter the beam-combining optical system 12.

Note that the substrate on which the LDs 100 are disposed serves as a heat sink that dissipates the heat radiated from the LDs 100 to control the temperature of the LDs within a prescribed range.

From each of the LDs 100, a laser beam of prescribed wavelength and prescribed color is emitted. In the following description, it is assumed that the laser beam emitted from each of the LDs 100 is a blue laser beam.

The beam-combining optical system 12 includes a positive lens 121 and a negative lens 122, and combines a plurality of laser beams emitted from the LD module 10 to form a laser-beam bundle LB.

More specifically, the beam-combining optical system 12 is an afocal system where the focal point of the positive lens 121 on the light exiting side matches the focal point of the negative lens 122 on the light exiting side.

Each of the collimated blue laser beams is concentrated by the positive lens 121 towards the focal point of the positive lens 121 on the light exiting side, and enters the negative lens 122.

The negative lens 122 combines the multiple laser beams into a bundle of parallel laser beams, and a blue laser-beam bundle LB is emitted from the negative lens 122.

As described above, the LD module 10, the LD driver 11, and the beam-combining optical system 12 together configure a laser light source.

The laser light source combines a plurality of laser beams to form a laser-beam bundle LB.

The combined coherent laser-beam bundle LB enters the homogenizer 14.

The homogenizer 14 functions to remove or reduce the coherence of the laser-beam bundle LB.

Accordingly, the coherence of the laser-beam bundle that has passed the homogenizer 14 is completely removed or sufficiently reduced so as to be harmless even when the laser-beam bundle leaks to the outside.

The homogenizer 14 may be a diffusing board, a microprism array, or a microlens array that removes or reduces the coherence of the laser-beam bundle LB by randomly modifying the wavefront of the laser-beam bundle LB.

In the following description, it is assumed that the homogenizer 14 is a diffusing board, and the homogenizer 14 may be referred to as a diffusing board 14.

Note that the laser-beam bundle whose coherence is removed or reduced by the diffusing board 14 will be referred to as an incoherent laser-beam bundle.

In FIG. 1, the incoherent laser-beam bundle is indicated by "ILB".

The incoherent laser-beam bundle ILB enters the beam splitter 16. The beam splitter 16 is a reflecting mirror that reflects a prescribed amount (for example, ninety-seven percent) of the incoherent laser-beam bundle ILB and transmits the rest of the incoherent laser-beam bundle ILB.

The beam splitter is not limited to an element that splits a laser-beam bundle by controlling the reflectivity or transmittance as described above, but may be any known element such as polarization reflective layer that splits beams by using a polarization state.

The incoherent laser-beam bundle ILB that is reflected at the beam splitter 16 passes through the emission optical system 20, and is emitted to the outside of the laser light source device as illumination light Lt.

As long as the diffusing board 14 operates normally, the illumination light Lt is incoherent and thus is harmless as the coherence of the illumination light Lt is completely removed or sufficiently reduced.

On the other hand, the incoherent laser-beam bundle ILB that has passed through the beam splitter 16 enters the photosensor 18 as a for-detection laser-beam bundle LS. More specifically, the beam splitter 16 branches a part of the incoherent laser-beam bundle ILB that is guided from the homogenizer 14 to the emission optical system 20, as the for-detection laser-beam bundle LS.

The optical branching of a laser-beam bundle performed by a beam splitter is not limited to the example described above. For example, the light reflected by the beam splitter may enter the photosensor 18, and the light that has passed through the beam splitter may be emitted to the outside through the emission optical system 20.

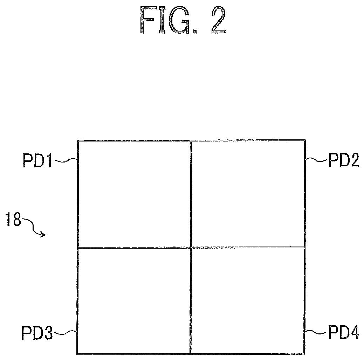

FIG. 2 is a schematic diagram of an example of the photosensor 18 according to the present example embodiment. In FIG. 2, a segmented photodiode is provided with a plurality of photosensors in a single package.

More specifically, the photosensor 18 illustrated in FIG. 2 is a four-way split photodiode, and the light receiving surface of the photosensor 18 is divided into four photodetectors PD1, PD2, PD3, and PD4.

Each of the photodetectors PD1 to PD4 is configured to output a light signal that is determined by the received amount of light, in an independent manner.

As illustrated in FIG. 1, the photodetectors PD1 to PD4 output current signals PDI1 to PDI4.

The current signals PDI1 to PDI4 are input to amplifiers 221 to 224, and the current signals PDI1 to PDI4 are amplified and converted into voltage signals PDV1 to PDV4, respectively.

The voltage signals PDV1 to PDV4 are converted into digital signals PDD1 to PDD4 by the ADCs 231 to 234.

The digital signals PDD1 to PDD4 are input to the controller 25.

The controller 25 determines whether the homogenizer (diffusing board) 14 is normally functioning based on the received digital signals PDD1 to PDD4, and controls the light emission of the laser light source.

The control signal CTRL that is input to the controller 25 as illustrated in FIG. 1 is used for controlling the laser light source by an external device or the operation made by a user, or for outputting the state of the laser light source device to an external device or operating unit.

The control signal CTRL is realized by inputting and outputting a command or data with a serial communication interface such as inter-integrated circuit (I2C) and serial peripheral interface (SPI).

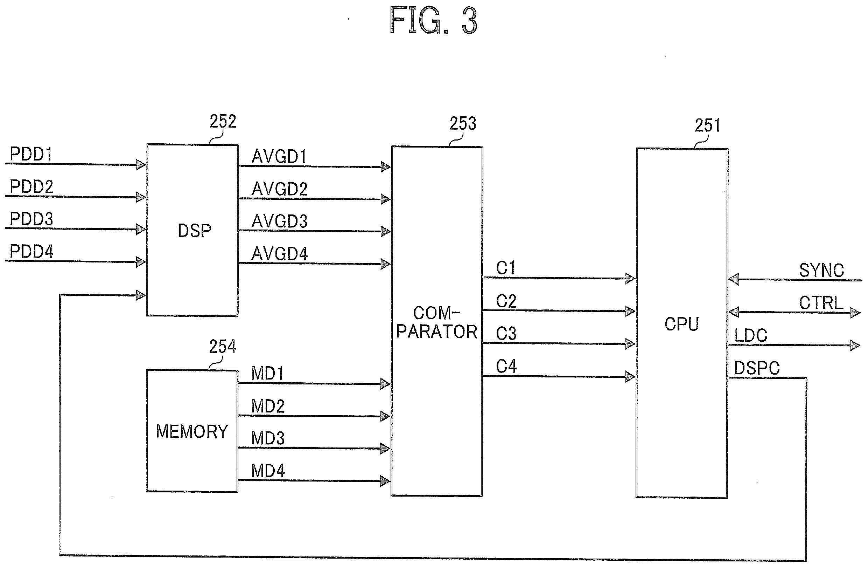

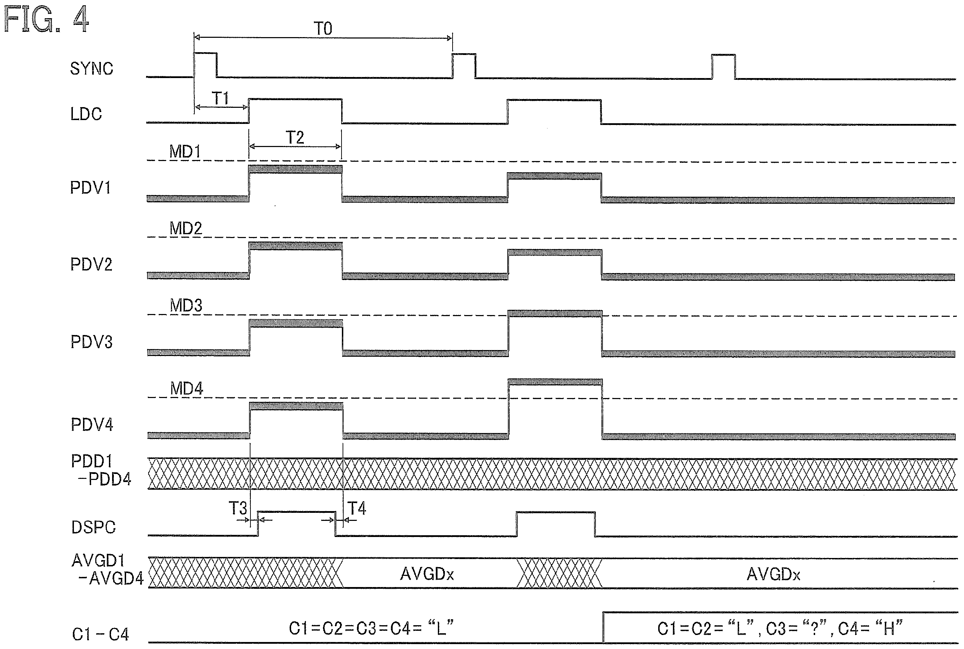

The control of light emission is described below with reference to FIG. 3 and FIG. 4.

FIG. 3 illustrates an example of the configuration of the controller 25 illustrated in FIG. 1, according to the present example embodiment.

The controller 25 includes a central processing unit (CPU) 251, digital signal processor (DSP) 252, a comparator 253, and a memory 254.

The CPU 251 is a block that controls the entirety of the operation of the controller.

When an activation command is received through a control signal CTRL, the CPU 251 outputs a control signal LDC that controls the light emission of the LD 100 to the LD driver 11 of FIG. 1, at a prescribed timing of start T1 determined by a synchronizing signal SYNC of the cycle T0, as illustrated in FIG. 4.

When the control signal LDC is received, the LD driver 11 generates LD driving current IL1 during the period of T2 and outputs the generated LD driving current IL1 to the LDs 100 (see FIG. 4). When the LDs 100 are energized by the LD driving current IL1, the LDs 100 emit a laser beam of prescribed wavelength (i.e., blue laser beam according to the present example embodiment).

Moreover, the CPU 251 outputs a control signal DSPC to the DSP 252. The DSP 252 also receives data signals PDD1 to PDD4. As illustrated in FIG. 4, when the control signal DSPC input from the CPU 251 reaches an H-level, the DSP 252 calculates the average of each of the data signals PDD1 to PDD4 while the level of the control signal DSPC is maintained at the H-level.

As illustrated in FIG. 3, the calculated averages are output to the comparator 253 as average data AVGD1 to AVGD4. The averages of the data signal PDD1 to PDD4 are calculated to remove noise of the light signal.

As illustrated in FIG. 4, when the control signal DSPC input from the CPU 251 returns to an L-level, the DSP 252 stops calculating the average of each of the data signals PDD1 to PDD4.

Then, the average data AVGD1 to AVGD4 at that time is maintained.

The maintained average data AVGD1 to AVGD4 as described above serves as the data of the amount of blue light received by the photodetectors PD1 to PD4 of the photosensor 18.

The average data AVGD1 to AVGD4 are input to the comparator 253.

The DSPC indicates a delay time between the time at which the LDs 100 start emitting light due as controlled by the control signal LDC and the time at which the data signals PDD1 to PDD4 are received.

More specifically, the timing of start is delayed by the time T3 with reference to the rising edge of the control signal LDC, as illustrated in FIG. 4.

Moreover, the timing of termination is set earlier than the falling edge of the control signal LDC by the time T4, such that the calculation of the averages of the data signals PDD1 to PDD4 is completed while the LDs 100 are emitting light.

The comparator 253 receives the average data AVGD1 to AVGD4 from the DSP 252, and also receives threshold data MD1 to MD4 from the memory 254.

Then, the comparator 253 compares the average data AVGDx (x=1 to 4) with the threshold data MDx (x=l to 4), and outputs the results of the comparison as a signal Cx (x=l to 4).

As illustrated in FIG. 4, for example, the signals Cx (x=1 to 4) becomes "L" when "AVGDx ≤ MDx", and becomes "H" when "AVGDx > MDx". When it is detected that any of the signals C1 to C4 is at "H" after the control signal DSPC is dropped to "L", the CPU 251 controls the control signal LDC to terminate the light emission of all the LDs 100 of the LD module 10.

In other words, the CPU 251 determines that the amount of the light received by the photodetector PD1 has been changed significantly, for example, when the average data AVGD1 is greater than the threshold data MD 1, and determines that the diffusing board 14 is operating abnormally due to breakage or displacement.

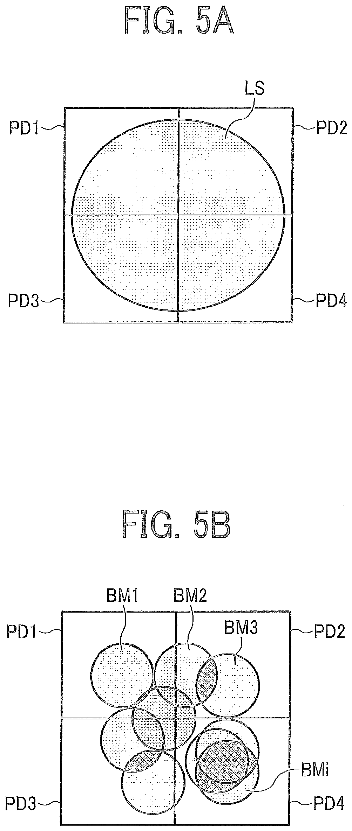

Such cases are described below with reference to FIG. 5.

FIG. 5A illustrates a state in which the diffusing board 14 is normally functioning, according to the present example embodiment.

As described above, the laser-beam bundle LB that enters the diffusing board 14 is a laser-beam bundle obtained by combining a plurality of laser beams and thus is coherent.

When the coherence of the laser-beam bundle LB is completely removed or sufficiently reduced by the diffusing board 14, the light intensity of the for-detection laser-beam bundle LS is even throughout the laser-beam bundle.

More specifically, the intensity distribution over the four photodetectors PD1 to PD4 of the photosensor 18 formed by the for-detection laser-beam bundle LS is even, and the outputs of the photodetectors PD1 to PD4 are substantially equal to each other.

The threshold data MD 1 to MD 4 as described above are set to appropriate values that do not cause erroneous detection for a normally deceived light signal illustrated in FIG. 5A. When the diffusing board 14 is under abnormal conditions, i.e., when the diffusing board 14 is displaced or broken, the complete removal or sufficient reduction of coherence is not performed by the diffusing board 14.

Under such abnormal conditions, a coherent laser-beam bundle enters the photosensor 18.

By contrast, the laser-beam bundle LB emitted from the laser light source is formed by combining a plurality of laser beams. If the laser-beam bundle LB is microscopically viewed, a plurality of parallel laser beams are closely bundled, and integration among beams is not performed by the diffusing board 14.

For this reason, as illustrated in FIG. 5B, a plurality of coherent laser beams BM1, BM2, ..., and BMi separately enter the photodetectors of the photosensor 18.

This happens due to the tolerance of the laser light source or variations in the performance of the components of the optical systems.

In other words, the amounts of the light received at the photodetectors PD1 to PD4 are nonuniform in the state illustrated in FIG. 5B.

In the state of FIG. 5B, for example, the amount of the light received by the photodetectors PD1 and PD2 becomes smaller than that of a normal state, and the amount of the light received by the photodetectors PD3 and PD4 becomes greater than that of a normal state.

In the example illustrated in FIG. 5B, an increase in the amount of the light received at the photodetector PD4 is large in particular. The increase exceeds the threshold data MD4, and the signal C4 reaches an H-level as illustrated in FIG. 4.

The CPU 251 detects this state, and terminates the light emission of the laser light source through the control signal LDC.

Here, cases in which the photodetectors PD1 to PD4 illustrated in FIGS. 5A and 5B are not separate but form a single photodetector are considered for comparison purposes.

In such cases, although the distribution of light is different between the normal state illustrated in FIG. 5A and the abnormal state illustrated in FIG. 5B, the amount of the light received by the single photodetector is the same therebetween.

Accordingly, an abnormality in the diffusing board 14 cannot be detected by such a single photodetector.

The photosensor according to the present example embodiment includes a plurality of photodetectors for the above technical reason.

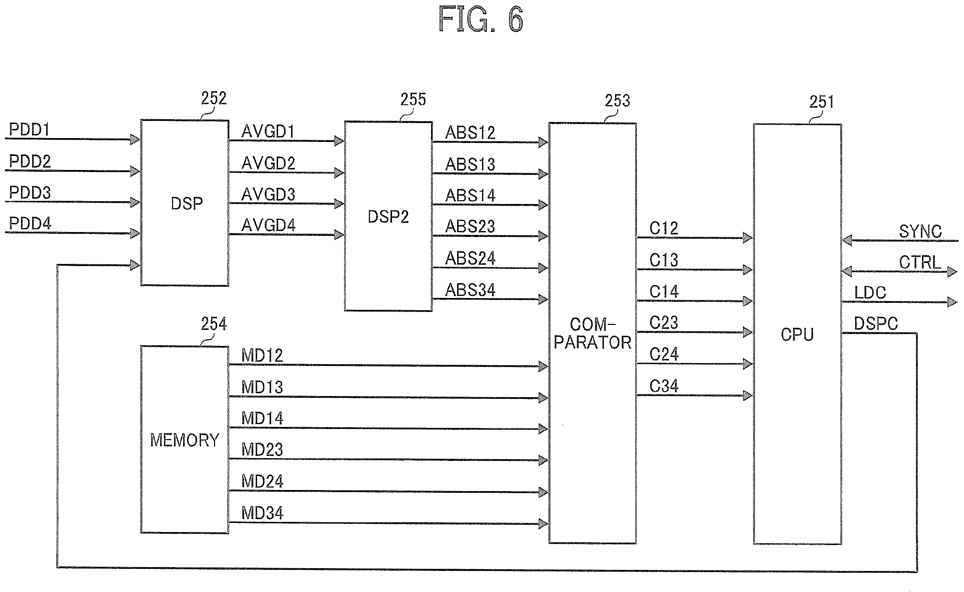

FIG. 6 illustrates another example of the configuration of the controller 25 illustrated in FIG. 1, according to the present example embodiment.

For the purpose of simplification, like reference signs are given to elements similar to those illustrated in FIG. 3.

In the example configuration illustrated in FIG. 6, a DSP 255 that serves as a second digital signal processor is added to the example configuration illustrated in FIG. 3.

The DSP 252 receives the data signals PDD1 to PDD4 in a similar manner to the example configuration illustrated in FIG. 3, and temporally calculates averages of the received data signals PDD1 to PDD4 to output the average data AVGD1 to AVGD4.

The average data AVGD1 to AVGD4 are input to the DSP 255.

The DSP 255 calculates differences among the received average data AVGD1 to AVGD4, and outputs the absolute values of the calculated differences as difference data ABS12 to ABS14, ABS23, ABS24, and ABS34.

The six types of difference data ABS12 to ABS14, ABS23, ABS24, and ABS34 illustrated in FIG. 6 are obtained as follows.
ABS12: |AVGD1-AVGD2|
ABS13: |AVGD1-AVGD3|
ABS14: |AVGD1-AVGD4|
ABS23: |AVGD2-AVGD3|
ABS24: |AVGD2-AVGD4|
ABS34: |AVGD3-AVGD4|

Assuming that "x=1 to 4", "y=1 to 4", "(ABS12 to ABS14, ABS23, ABS24, and ABS34)=ABSxy", difference data ABSxy is the absolute value of the difference between average data AVGDx and average data AVGDy.

In other words, difference data ABSxy indicates the absolute value of the difference between the averages of the amount of the light received by a pair of the photodetectors PDx and PDy arbitrarily selected from the four photodetectors PD1 to PD4 of the photosensor 18.

In the memory 254, threshold data MD12 to MD14, MD23, MD24, and MD34 that correspond to the six kinds of difference data ABS12 to ABS14, ABS23, ABS24, and ABS34 are stored.

The threshold data MD12 to MD14, MD23, MD24, and MD34 are input to the comparator 253.

The comparator 253 compares the input difference data ABS12 to ABS14, ABS23, ABS24, and ABS34 with the corresponding threshold data MD12 to MD14, MD23, MD24, and MD34, and outputs the results of the comparison as signals C12 to C14, C23, C24, and C34.

The threshold data MD12 to MD14, MD23, MD24, and MD34 are set to appropriate values that do not cause erroneous detection for a normally deceived light signal illustrated in FIG. 5A. Assuming that "x=1 to 4" and "y=1 to 4", a signal Cxy becomes "L" when "ABSxy ≤ MDxy", and becomes "H" when "ABSxy > MDxy".

The six kinds of signals C12 to C14, C23, C24, and C34 are input to the CPU 251. When it is detected that any of the signals C12 to C14, C23, C24, and C34 is at "H", the CPU 251 controls the control signal LDC to terminate the light emission of all the LDs 100 of the LD module 10.

In the example configuration described above, accuracy of detection may improve by calculating differences in the data of the light received by a plurality of photodetectors. This happens as variations in signal are magnified. For example, in the normal state illustrated in FIG. 5A, the photodetectors PD1 to PD4 are approximately equally irradiated with light.

In such a normal state, it is assumed that the values of the average data AVGD1 to AVGD4, which indicate the amount of the light received by the photodetectors PD1 to PD4, are, for example, all "4".

By contrast, assume that the diffusing board 14 is under abnormal conditions and the state of the light received by the photodetectors PD1 to PD4 is uneven as illustrated in FIG. 5B.

In such cases, for example, the values of the average data AVGD1 and AVGD2 are both reduced to "2" and the values of the average data AVGD3 and AVGD4 are increased to "5" and "7", respectively.

Then, the difference in the average data AVGD1 to AVGD4 in the normal state and the abnormal state is "7-4=3" at the maximum, in the example described above with reference to FIG. 3.

By contrast, in the example configuration described above with reference to FIG. 6, the difference data ABS12 to ABS14, ABS23, ABS24, and ABS34 are all "0" in a normal state.

In the abnormal state as described above, the values of the average data AVGD1 and AVGD2 are both reduced to "2", and the values of the average data AVGD3 and AVGD4 are increased to "5" and "7", respectively.

Accordingly, the difference data ABS12 to ABS14, ABS23, ABS24, and ABS34 becomes "5 (=ABS14=ABS24=7-2)" at the maximum.

This means that "ABS14=ABS24=0" in the normal state and the difference in the abnormal state is "5".

More specifically, the difference "5" is greater than the difference "3" described above with reference to FIG. 3, and thus accuracy of detection improves according to the example configuration illustrated in FIG. 6.

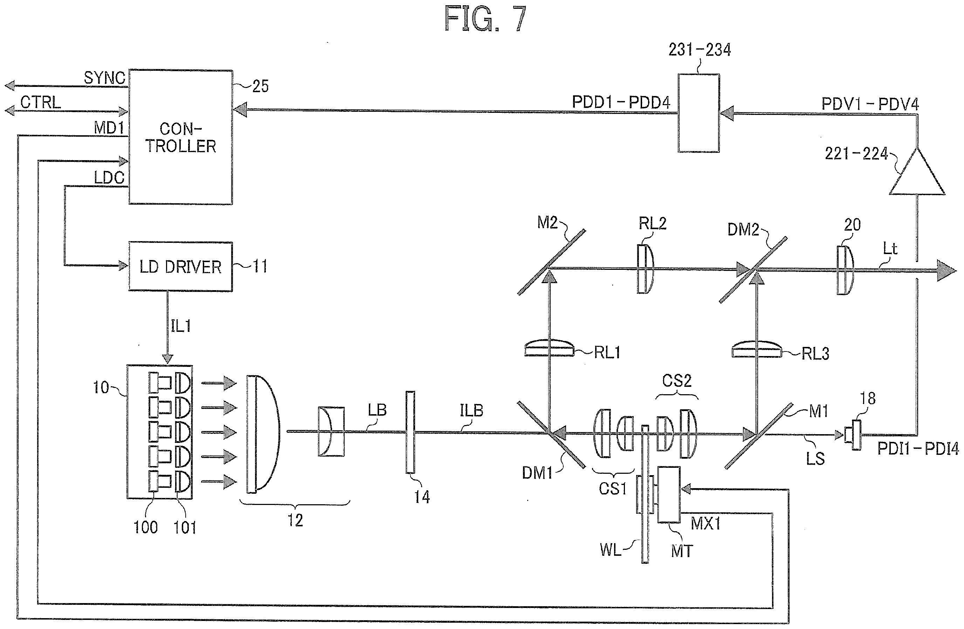

FIG. 7 schematically illustrates a laser light source device according to another example embodiment of the present invention.

For the purpose of simplification, like reference signs are given to elements similar to those illustrated in FIG. 1.

In a similar manner to the example embodiment described above, the LD module 10, the LD driver 11, and the beam-combining optical system 12 together configure a laser light source, and the laser light source emits a blue laser-beam bundle LB.

The coherence of the laser-beam bundle LB is completely removed or sufficiently reduced by the diffusing board 14 that serves as a homogenizer, and is converted into an incoherent laser-beam bundle ILB.

The incoherent laser-beam bundle ILB enters the dichroic mirror DM1. The dichroic mirror DM1 transmits the blue light and reflects the light of wavelength of the other colors.

The incoherent laser-beam bundle ILB that has passed through the dichroic mirror DM1 enters the lens system CS1, and is concentrated on a fluorescent wheel WL as a light spot by the lens system CS1.

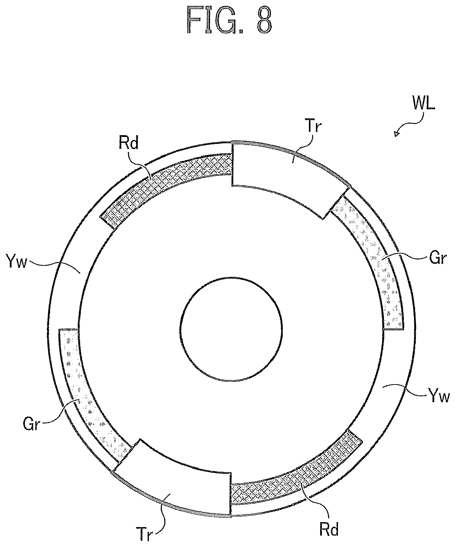

As illustrated in FIG. 8, the fluorescent wheel WL is formed by light transmitting units, and fluorescent-material layers Rd, Yw, and Gr that are cyclically formed on the periphery of a circular substrate made of metal or the like.

When the fluorescent wheel WL is irradiated with blue laser-beam bundle, the fluorescent-material layer Rd, the fluorescent-material layer Yw, and the fluorescent-material layer Gr emit fluorescence of wavelength bands of red color, yellow color, and green color, respectively.

The light transmitting units are formed by cutting the substrate to transmit the irradiated blue laser-beam bundle.

In a normal state, the fluorescent wheel WL is irradiated with the incoherent laser-beam bundle ILB that has been concentrated to be a light spot by the lens system CS1 as described above.

The fluorescent wheel WL is provided for the motor MT, and is driven by the motor MT to rotate.

In other words, when an activation command is received through a control signal CTRL, the controller 25 outputs a motor driving signal MD1 to activate the motor MT. The motor MT is internally or externally provided with a device for detecting the rotating state, and the motor MT outputs a rotation detection signal MX1.

The controller 25 receives the rotation detection signal MX1 to sense the rotating state of the motor MT. When the controller 25 detects that the motor MT has reached a prescribed rotation speed, the controller 25 generates and outputs a synchronizing signal SYNC that synchronizes with the rotation cycle of the motor MT, and outputs a control signal LDC that synchronizes with the synchronizing signal SYNC to the LD driver 11.

When the control signal LDC is received, the LD driver 11 generates LD driving current IL1 and outputs the generated LD driving current IL1 to the LDs 100 of the LD module 10.

By so doing, a blue laser-beam bundle LB is obtained by combining a plurality of blue laser beams that are emitted from a laser light source, as described above with reference to the example embodiment of FIG. 1.

The blue laser-beam bundle LB as obtained above is converted into an incoherent laser-beam bundle ILB by the diffusing board 14, and the incoherent laser-beam bundle ILB passes through the dichroic mirror DM1 and is concentrated on the fluorescent wheel WL by the lens system CS1.

The portion of the fluorescent wheel WL irradiated by the light spot of the incoherent laser-beam bundle ILB switches cyclically in the order of the fluorescent-material layers Rd, Yw, and Gr, and the light transmitting unit Tr.

Then, as the portion of the fluorescent wheel WL irradiated by the light spot of the incoherent laser-beam bundle ILB switches in the order of the fluorescent-material layers Rd, Yw, and Gr, fluorescence of wavelength band of red, yellow, and green is emitted.

The fluorescence of red, yellow, and green is approximately collimated by the lens system CS1, and is reflected at the dichroic mirror DM1 and is reflected at the mirror M2 after passing through the relay lens RL1. Further, the fluorescence that is reflected by the mirror M2 passes through the relay lens RL2, and is headed to the dichroic mirror DM2.

On the other hand, the blue incoherent laser-beam bundle ILB that has passed through the light transmitting unit Tr of the fluorescent wheel WL passes through the lens system CS2 and enters the mirror M1.

The mirror M1 is a reflecting mirror that reflects a prescribed amount (for example, ninety-seven percent) of the incoherent laser-beam bundle ILB and transmits the rest of the incoherent laser-beam bundle ILB, and the mirror M1 serves as a beam splitter.

The blue incoherent laser-beam bundle ILB that is reflected by the mirror M1 passes through the relay lens RL3 and enters the dichroic mirror DM2.

The dichroic mirror DM2 reflects the blue light and transmits the light of the other colors.

Accordingly, the fluorescence of red, yellow, green entering from the relay lens RL2 side passes through the dichroic mirror DM2, and the blue incoherent laser-beam bundle entering from the relay lens RL3 side is reflected at the dichroic mirror DM2.

As a result, the fluorescence of red, yellow, green and the blue incoherent laser-beam bundle are emitted to the outside as illumination light Lt that is temporally separate.

Among the components of the illumination light Lt, the blue light is incoherent laser-beam bundle, and the light of red, yellow, and green is all fluorescent and thus is incoherent.

In other words, the illumination light Lt is incoherent and thus is not harmful.

As described above, the mirror M1 serves as a beam splitter, and transmits a part of the blue incoherent laser-beam bundle as a for-detection laser-beam bundle LS.

The for-detection laser-beam bundle LS is received by the photosensor 18. The photosensor 18 illustrated in FIG. 7 is also a four-way split photodiode in a similar manner to the photosensor 18 of the laser light source device illustrated in FIG. 1.

The processes of detecting abnormality at the diffusing board 14 that serves as a homogenizer and controlling the light emission of the laser light source based on outputs from the four photodetectors of the photosensor 18 are the same as the processes described above with reference to the example embodiment illustrated in FIG. 1.

Both the configuration of FIG. 3 and the configuration of FIG. 6 are applicable to the actual configuration of the controller 25 illustrated in FIG. 7. The light emission of the laser light source is controlled based on the selected configuration.

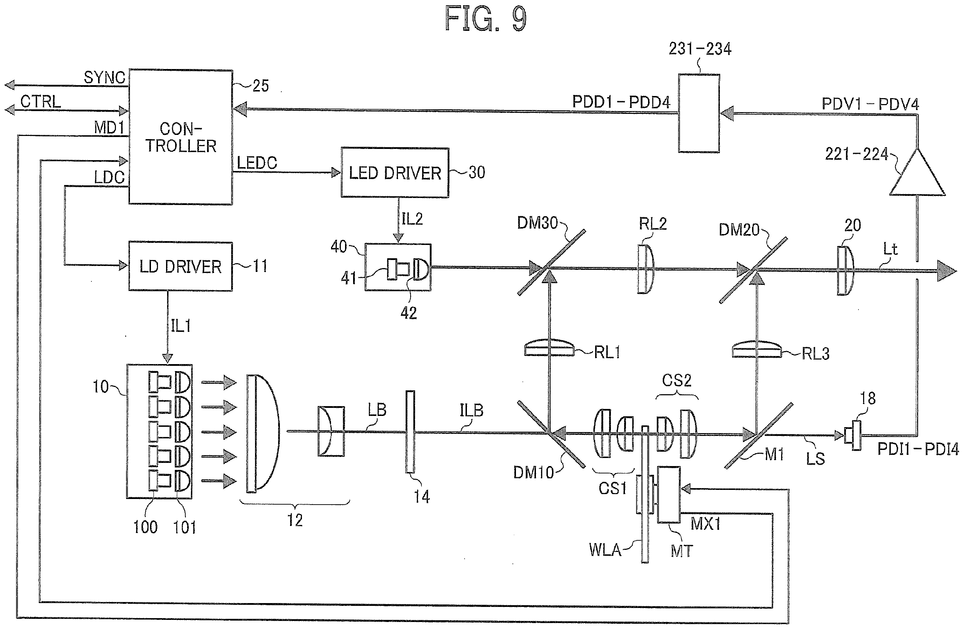

FIG. 9 schematically illustrates a laser light source device according to a different example embodiment of the present invention.

For the purpose of simplification, like reference signs are given to elements similar to those illustrated in FIG. 1 and FIG. 7.

The laser light source device according to the present example embodiment has several elements in common with the laser light source device illustrated in FIG. 7. For this reason, elements that are different from the laser light source device illustrated in FIG. 7 are mainly described below.

The laser light source device of FIG. 9 is used to obtain light of four colors of red, yellow, green, and blue as illumination light in a similar manner to the example embodiments described above, but further includes a light source that emits red light in addition to the laser light source that emits a blue laser-beam bundle.

The light source that emits red light is an incoherent light source including a light-emitting diode (LED) module 40 and an LED driver 30 that drives the LED module 40.

The LED module 40 includes a LED 41 for emitting incoherent red light, and a collimator lens 42 for collimating the emitted red light. The LED 41 and the collimator lens 42 are loaded on a substrate.

Note that the substrate on which the LED 41 and the collimator lens 42 are disposed serves as a heat sink that dissipates the heat radiated from the LED 41 to control the temperature of the LED 41 within a prescribed range.

The LED driver 30 drives the LED 41 to flash based on a control signal LEDC received from the controller 25.

More specifically, when the LED 41 flashes, the red light emitted from the LED 41 is collimated by the collimator lens 42 and enters the dichroic mirror DM30.

The dichroic mirror DM30 transmits the red light and reflects the light of the other colors.

The red light that has passed through the dichroic mirror DM30 enters a dichroic mirror DM20 after passing through the relay lens RL2.

The dichroic mirror DM20 transmits the red light and green light, and reflects the light of the other colors.

Accordingly, the red light that has passed through the dichroic mirror DM20 passes through the light-emission optical system 20, and is emitted to the outside. The red light is incoherent and thus is not harmful even when the red light is emitted to the outside.

The LD module 10, the LD driver 11, and the beam-combining optical system 12 together configure a laser light source, and the laser light source emits a blue laser-beam bundle LB. The blue laser-beam bundle LB passes through the diffusing board 14 and changes to an incoherent laser-beam bundle ILB, and the incoherent laser-beam bundle ILB enters the dichroic mirror DM10.

The dichroic mirror DM10 transmits the blue light and reflects the light of the other colors.

The incoherent laser-beam bundle ILB that has passed through the dichroic mirror DM10 enters the lens system CS1, and is concentrated on a fluorescent wheel WLA as a light spot by the lens system CS1.

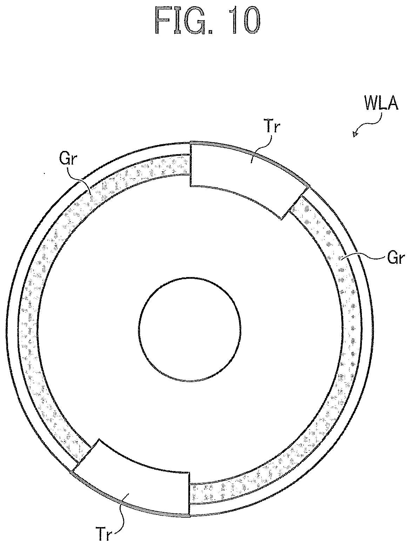

As illustrated in FIG. 10, the fluorescent wheel WLA is formed by light transmitting units Tr and fluorescent-material layers Gr that are cyclically and alternately formed on the periphery of a circular substrate made of metal or the like.

The fluorescent-material layers Gr emit fluorescence of wavelength bands of green color when irradiated with blue laser beam. The green fluorescence passes through the lens system CS1 and is reflected by the dichroic mirror DM10, and then passes through the relay lens RL1 and enters the dichroic mirror DM30.

Then, the green fluorescence passes through the dichroic mirror DM20, and is emitted to the outside through the emission optical system 20. Because the green light is fluorescent, the emitted green light is incoherent and thus is not harmful.

The incoherent laser-beam bundle ILB that has passed through the light transmitting units Tr of the fluorescent wheel WLA passes through the lens system CS2 and enters the mirror M1, and when the light is reflected at the mirror M1, the light passes through the relay lens RL3 and enters the dichroic mirror DM20.

Then, the light is reflected at the dichroic mirror DM20, and is emitted to the outside through the emission optical system 20.

As long as the diffusing board 14 operates normally, the blue laser-beam bundle that is output to the outside is harmless as it is incoherent.

According to the laser light source device illustrated in FIG. 9, the red light emitted from the LED 41, the blue light of the incoherent laser-beam bundle ILB, and the green light of green fluorescence can separately be obtained.

Moreover, yellow light may be obtained by synchronizing the light emission from the LED 41 and the light emission of green fluorescence from the fluorescent wheel WLA to combine the red light and green light.

Note that the processes of controlling the rotation of the fluorescent wheel WLA by the motor MT are equivalent to the processes of the example embodiment described above with reference to FIG. 7.

In other words, when an activation command is received through a control signal CTRL, the controller 25 outputs a motor driving signal MD1 to activate the motor MT.

The motor MT is internally or externally provided with a device for detecting the rotating state, and the motor MT outputs a rotation detection signal MX1.

The controller 25 receives the rotation detection signal MX1 to sense the rotating state of the motor MT. When the controller 25 detects that the motor MT has reached a prescribed rotation speed, the controller 25 generates and outputs a synchronizing signal SYNC that synchronizes with the rotation cycle of the motor MT, and outputs control signals LDC and LEDC that synchronize with the synchronizing signal SYNC to the LD driver 11 and the LED driver 30.

When the control signal LEDC is received, the LED driver 30 generates driving current IL2 based on the received control signal LEDC, and outputs the generated driving current IL2 to the LED 41 such that the LED 41 emits red light.

When the control signal LDC is received, the LD driver 11 generates LD driving current IL1 and outputs the generated LD driving current IL1 to the LD 100. When the LDs 100 are energized by the LD driving current IL1, the LDs 100 emit a laser beam of prescribed wavelength (i.e., blue laser beam according to the present example embodiment).

Also in the laser light source device illustrated in FIG. 9, the mirror M1 serves as a beam splitter, and transmits a part of the blue incoherent laser-beam bundle as a for-detection laser-beam bundle LS.

The for-detection laser-beam bundle LS is received by the photosensor 18. The photosensor 18 illustrated in FIG. 7 is also a four-way split photodiode in a similar manner to the photosensor 18 of the laser light source device illustrated in FIG. 1.

The processes of detecting abnormality at the diffusing board 14 that serves as a homogenizer and controlling the light emission of the laser light source based on outputs from the photodetectors of the photosensor 18 are the same as the processes described above with reference to the example embodiment illustrated in FIG. 1.

Both the configuration of FIG. 3 and the configuration of FIG. 6 are applicable to the actual configuration of the controller 25 illustrated in FIG. 7. The light emission of the laser light source is controlled based on the selected configuration.

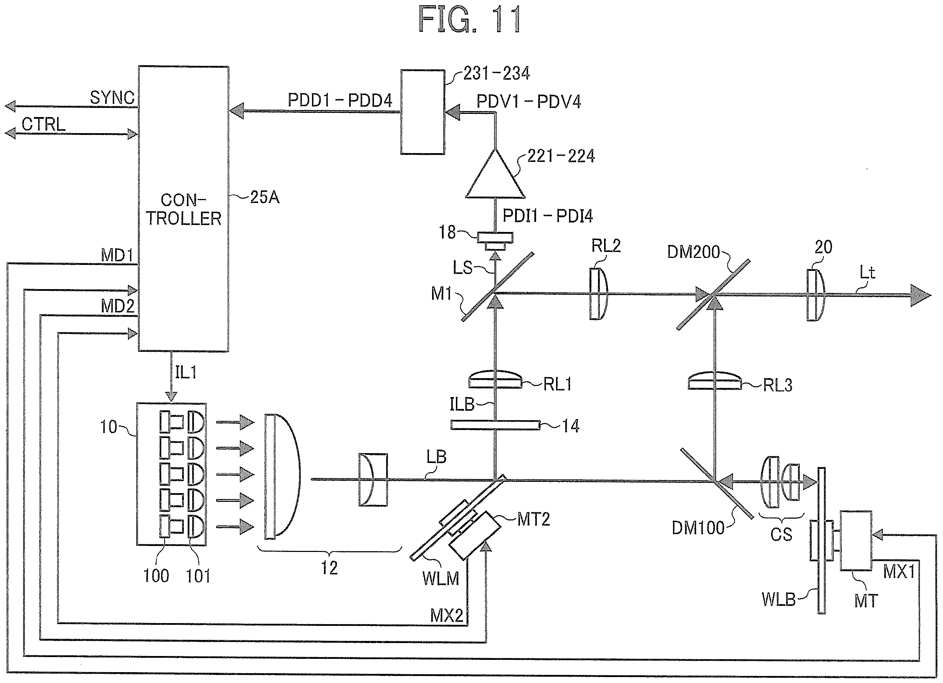

FIG. 11 illustrates a laser light source device according to another different example embodiment of the present invention.

For the purpose of simplification, like reference signs are given to elements similar to those illustrated in FIG. 1 and FIG. 7.

In a similar manner to the example embodiments illustrated in FIG. 1, FIG. 7, and FIG. 9, the laser light source device according to the present example embodiment of the present invention illustrated in FIG. 11 also emits a blue coherent laser-beam bundle LB from the light source.

The laser-beam bundle LB is formed by the beam-combining optical system 12 by combining a plurality of blue laser beams that are emitted from the LDs 100 of the LD module 10 and then are collimated by the corresponding collimator lens 101.

Note that the LD module 10 and the beam-combining optical system 12 may be the same as those of the example embodiments illustrated in FIG. 1, FIG. 7, and FIG. 9, and the LD driver that is provided for the laser light source in the example embodiments described above is included in the controller 25A in FIG. 11.

The blue laser-beam bundle LB that is emitted from the laser light source enters the mirror wheel WLM.

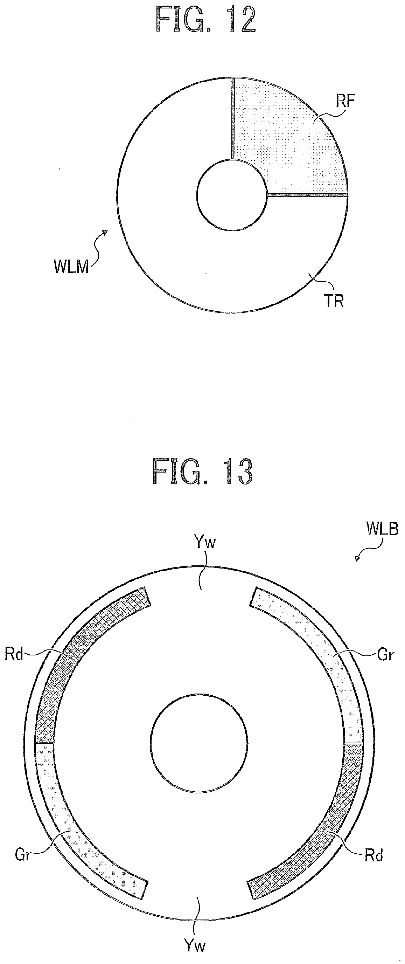

The mirror wheel WLM is shaped like a disk as illustrated, for example, in FIG. 12, and includes a reflection unit RF and a light transmitting unit TR.

More specifically, the mirror wheel WLM may be, for example, a glass disk whose reflection unit is formed by an aluminum film, where the rest is used as the light transmitting unit TR.

The mirror wheel WLM is driven by the motor MT2 to rotate. In other words, when the controller 25A is driven by a control signal CTRL, the controller 25 outputs a motor driving signal MD2 to activate the motor MT2.

The motor MT2 is also internally or externally provided with a device for detecting the rotating state, and the motor MT2 outputs a rotation detection signal MX2.

In the example embodiment illustrated in FIG. 11, a fluorescent wheel WLB is provided.

As illustrated in FIG. 13, the fluorescent wheel WLB is formed by fluorescent-material layers Rd, Yw, and Gr that are cyclically and alternately formed on the periphery of a circular substrate made of metal or the like.

When the fluorescent wheel WL is irradiated with blue laser-beam bundle, the fluorescent-material layer Rd, the fluorescent-material layer Yw, and the fluorescent-material layer Gr emit fluorescence of wavelength bands of red color, yellow color, and green color, respectively.

The fluorescent wheel WLB is provided for the motor MT, and is driven by the motor MT to rotate.

In other words, when an activation command is received through a control signal CTRL, the controller 25A outputs a motor driving signal MD1 to activate the motor MT. The motor MT is internally or externally provided with a device for detecting the rotating state, and the motor MT outputs a rotation detection signal MX1.

The controller 25A monitors the rotating state of the fluorescent wheel WLB through the rotation detection signal MX1, and monitors the rotating state of the mirror wheel WLM through the rotation detection signal MX2.

When the controller 25A detects that the motor MT and the motor MT2 are normally rotating through the rotation detection signals MX1 and MX2, the controller 25 generates and outputs a synchronizing signal SYNC that synchronizes with the rotation cycles of the motor MT and the motor MT2, and outputs a control signal that synchronizes with the synchronizing signal SYNC to an LD driver.

When the control signal is received, the LD driver generates LD driving current IL1 and outputs the generated LD driving current IL1 to the LDs 100 of the LD module 10. When the LDs 100 are energized by the LD driving current IL1, the LDs 100 emit laser beams of blue wavelength bands.

As described above, these laser beams are combined by the beam-combining optical system 12 as a coherent laser-beam bundle LB.

The combined laser-beam bundle LB enters the mirror wheel WLM. The mirror wheel WLM reflects the laser-beam bundle LB at the reflection field RF, and transmits the laser-beam bundle LB at the light transmitting unit TR.

In other words, the laser-beam bundle LB is temporally split into reflected light beam and transmitted light beam due to the reflection and transmission of the mirror wheel WLM.

The coherence of the laser-beam bundle LB that is reflected by the mirror wheel WLM is completely removed or sufficiently reduced by the diffusing board 14 that serves as a homogenizer, and is converted into an incoherent laser-beam bundle ILB.

The incoherent laser-beam bundle ILB passes through the relay lens RL1 and enters the mirror M1. The mirror M1 serves as a beam splitter in a similar manner to the mirror M1 illustrated in FIG. 7 and FIG. 9.

More specifically, the mirror M1 transmits a part of the blue incoherent laser-beam bundle as a for-detection laser-beam bundle LS, and the transmitted for-detection laser-beam bundle LS is received by the photosensor 18.

The incoherent laser-beam bundle ILB that is reflected at the mirror M1 passes through the relay lens RL2 and the dichroic mirror DM200, and is emitted to the outside as the illumination light Lt through the emission optical system 20.

As long as the diffusing board 14 operates normally in a normal state, the emitted illumination light Lt is harmless as it is incoherent laser-beam bundle ILB.

On the other hand, the blue laser-beam bundle LB that has passed through the mirror wheel WLM remains coherent, and passes through the dichroic mirror DM100 and is concentrated on the fluorescent wheel WLB as a light spot by the lens system CS.

Then, as the portion of the fluorescent wheel WL irradiated by the light spot of the incoherent laser-beam bundle ILB switches cyclically in the order of the fluorescent-material layers Rd, Yw, and Gr, the fluorescent wheel WLB irradiated with the laser-beam bundle LB emits fluorescence of wavelength band of red, yellow, and green.

The fluorescence of these colors enters the dichroic mirror DM100 after passing through the lens system CS.

The dichroic mirror DM100 transmits the blue light and reflects the light of the other colors.

More specifically, the fluorescence of red, yellow, and green that enters the dichroic mirror DM100 is sequentially reflected, and then passes through the relay lens RL3 and enters the dichroic mirror DM200.

The dichroic mirror DM200 transmits the blue light and reflects the light of the other colors.

Accordingly, the fluorescence of red, yellow, and green colors is reflected at the dichroic mirror DM200, and is emitted to the outside through the emission optical system 20. Because the fluorescence is incoherent, the emitted light is not harmful.

As described above, the illumination light Lt that has been temporally divided into blue, red, yellow, and green colors is emitted from the emission optical system 20.

As long as the diffusing board 14 operates normally in a normal state, the illumination light Lt of these colors is harmless as the coherence of the illumination light Lt is incoherent.

Also in the laser light source device illustrated in FIG. 11, the mirror M1 serves as a beam splitter, and transmits a part of the blue incoherent laser-beam bundle as a for-detection laser-beam bundle LS, as described above.

The for-detection laser-beam bundle LS is received by the photosensor 18. The photosensor 18 illustrated in FIG. 7 is also a four-way split photodiode in a similar manner to the photosensor 18 of the laser light source device illustrated in FIG. 1.

The processes of detecting abnormality at the diffusing board 14 that serves as a homogenizer and controlling the light emission of the laser light source based on outputs from the photodetectors of the photosensor 18 are the same as the processes described above with reference to the example embodiment illustrated in FIG. 1.

Both the configuration of FIG. 3 and the configuration of FIG. 6 are applicable to the actual configuration of the controller 25 illustrated in FIG. 7. The light emission of the laser light source is controlled based on the selected configuration.

In the above description, the laser-beam bundle LB that is obtained from a laser light source is described as a blue laser-beam bundle. However, as a matter of course, no limitation is indicated therein.

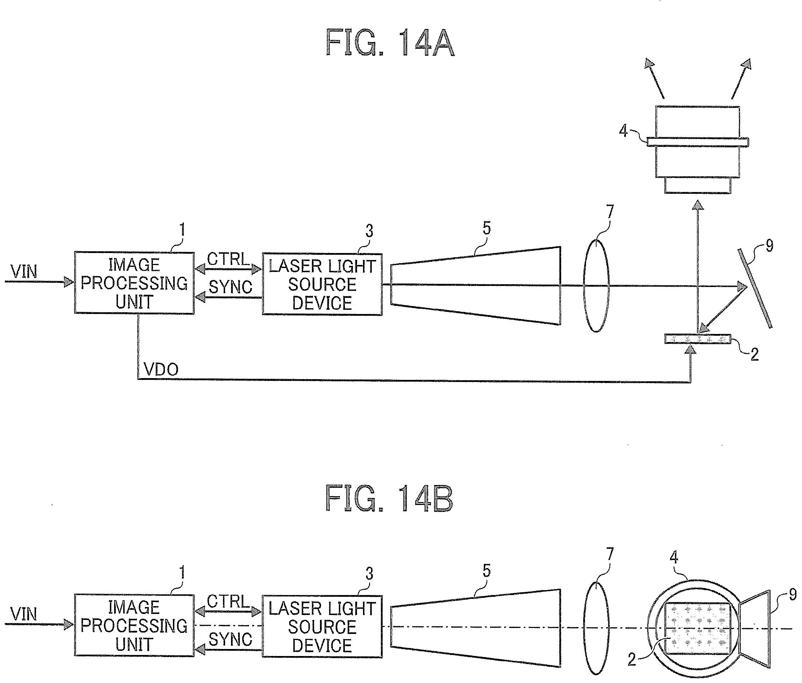

A projection display apparatus according to an example embodiment of the present invention is described below with reference to FIGS. 14A and 14B.

The projection display apparatus includes an image processing unit 1, a laser light source device 3, and a light guiding member 5.

Moreover, the projection display apparatus of FIGS. 14A and 1 4B includes a condenser lens system 7, a reflecting mirror 9, an image display element 2, and a projection optical system 4.

FIG. 14B illustrates the projection display apparatus of FIG. 14A viewed from the direction of the optical axis of the projection optical system 4, according to the present example embodiment.

The projection display apparatus illustrated in FIGS. 14A and 14B is used for projecting a color image, and the laser light source device 3 may be any of the laser light source devices described above with reference to FIG. 7, FIG. 9, and FIG. 11.

An image processing unit 1 receives a video signal VIN, and generates the rotation cycle data of the motor MT or the motor MT2 described above based on the frame frequency of the video signal VIN. Then, the image processing unit 1 outputs the generated rotation cycle data of the motor MT or the motor MT2 to the laser light source device 3 through a control signal CTRL.

Then, the image processing unit 1 receives a synchronizing signal SYNC from the laser light source device 3, and sequentially generates and outputs the drive waveform data of the LD 100 or LED 41 based on the received synchronizing signal SYNC.

When the operation setting of the laser light source device 3 is completed, the image processing unit 1 outputs an activation command to activate the laser light source device 3.

After the activation, the laser light source device 3 sequentially emits the illumination light of red, blue, green, and yellow colors with prescribed timing.

The illumination light that is emitted from the laser light source device 3 is converted into uniform planar illumination light by a light guiding member 5 to illuminate the image display surface of the image display element 2 through the condenser lens system 7 and the reflecting mirror 9.

The image processing unit 1 also generates a display signal that corresponds to each color of the illumination light based on the video signal VIN, and converts the display signal into a signal VDO for driving the image display element 2 and outputs the signal VDO.

Based on the signal VDO, the image components of each color are displayed on the image display surface of the image display element 2 in accordance with the sequence of the illumination light.

The reflection light that is modulated by the image components of each color displayed as above are projected on a screen by the projection optical system 4.

As the color of the projected image changes sequentially, a color image is observed.

The image display element 2 may be, for example, a digital micromirror device (DMD).

When an abnormality such as the breakage and displacement of the homogenizer is detected in the laser light source device 3, the operation of the laser light source device 3 is terminated as described above. This information is transferred to the image processing unit 1 through a control signal CTRL, and the image processing unit 1 terminates the projection and starts operating an indicator for indicating detected abnormality as desired.

## Claims

1. A laser light source device (3) comprising:
a laser light source (10, 11, 12) configured to combine a plurality of laser beams, each of a same given colour, to emit a laser-beam bundle;
a homogenizer (14) configured to remove or reduce coherence of the laser-beam bundle emitted from the laser light source (10, 11, 12) by randomly modifying the wavefront of the laser-beam bundle;
an optical system (20) configured to emit the laser-beam bundle that has passed through the homogenizer (14);
a beam splitter (16) arranged between the homogenizer (14) and the optical system (20) and configured to branch a part of the laser-beam bundle that is guided from the homogenizer (14) to the optical system, as a for-detection laser-beam bundle (LS);
a photosensor (18) including a plurality of photodetectors configured to receive the for-detection laser-beam bundle (LS) branched by the beam splitter (16); and
a light emission controller (25) configured to control light emission of the laser light source (10, 11, 12) based on outputs from the plurality of photodetectors of the photosensor (18) to terminate or reduce light emission when an output of at least one of the photodetectors exceeds a threshold value the laser light source device being **characterised in that** said plurality of photodetectors are arranged so as to be proximate to each other, the laser light source device being further **characterised in that** the output of each photodetector of said plurality of photodetectors is compared with the threshold value before the termination or reduction of light emission when an output of at least one of the photodetectors exceeds a threshold value, or further **in that** the the light emission controller is configured to control light emission of the laser light source based on outputs of the plurality of photodetectors of the photosensor to terminate or reduce light emission when a difference between outputs of two or more of the photodetectors exceeds a prescribed amount.

2. The laser light source device (3) according to claim 1, wherein the photosensor (18) is a segmented photodiode including the plurality of photodetectors in a single package.

3. The laser light source device (3) according to claim 1 or claim 2, wherein the beam splitter (16) is a reflecting mirror whose reflectivity is set so as to transmit a part of incident light without reflecting the part of incident light.

4. A projection display apparatus comprising a laser light source device (3) according to any one of claims 1 to 3, configured to irradiate an image displayed on an image display element (2) with illumination light emitted from the laser light source and to project light modulated by the image upon magnifying the light by a projection optical system (4).

## Patentansprüche

1. Laserlichtquellenvorrichtung (3), umfassend:
eine Laserlichtquelle (10, 11, 12), welche konfiguriert ist, um eine Vielzahl von Laserstrahlen, jeweils mit einer gleichen gegebenen Farbe, zu kombinieren, um ein Laserstrahlbündel auszugeben,
einen Homogenisator (14), welcher konfiguriert ist, um die Kohärenz des von der Laserlichtquelle (10, 11, 12) ausgegebenen Laserstrahlbündels zu entfernen oder reduzieren, indem die Wellenfront des Laserstrahlbündels zufällig modifiziert wird,
ein optisches System (20), welches konfiguriert ist, um das Laserstrahlbündel auszugeben, welches den Homogenisator (14) durchlaufen hat;
einen Strahlteiler (16), welcher zwischen dem Homogenisator (14) und dem optischen System (20) angeordnet und konfiguriert ist, um einen Teil des Laserstrahlbündels zu verzweigen, welcher von dem Homogenisator (14) zu dem optischen System geleitet wird, als ein Detektion-Laserstrahlbündel (LS);
einen Fotosensor (18), eine Vielzahl von Fotodetektoren einschließend, welche konfiguriert sind, um das Detektion-Laserstrahlbündel (LS) zu empfangen, welches von dem Strahlteiler (16) verzweigt wird, und
eine Lichtemissionssteuerung (25), welche konfiguriert ist, um eine Lichtemission der Laserlichtquelle (10, 11, 12) basierend auf Ausgaben von der Vielzahl von Fotodetektoren des Fotosensors (18) zu steuern, um eine Lichtemission zu beenden oder zu reduzieren, wenn eine Ausgabe von mindestens einem der Fotodetektoren einen Schwellenwert überschreitet, wobei die Laserlichtquellenvorrichtung **dadurch gekennzeichnet ist, dass** die Vielzahl von Fotodetektoren derart angeordnet ist, dass sie nahe beieinander liegen, wobei die Laserlichtquellenvorrichtung ferner **dadurch gekennzeichnet ist, dass** die Ausgabe von jedem Fotodetektor der Vielzahl von Fotodetektoren mit dem Schwellenwert verglichen wird, vor der Beendung oder Reduzierung der Lichtemission, wenn eine Ausgabe von mindestens einem der Fotodetektoren einen Schwellenwert überschreitet, oder ferner dass die Lichtemissionssteuerung konfiguriert ist, um eine Lichtemission der Laserlichtquelle basierend auf Ausgaben von der Vielzahl von Fotodetektoren des Fotosensors zu steuern, um eine Lichtemission zu beenden oder zu reduzieren, wenn ein Unterschied zwischen den Ausgaben der zwei oder mehr Fotodetektoren einen vorgeschriebenen Wert überschreitet.

2. Laserlichtquellenvorrichtung (3) nach Anspruch 1, wobei der Fotosensor (18) eine segmentierte Fotodiode ist, welche die Vielzahl von Fotodetektoren in einem einzigen Gehäuse einschließt.

3. Laserlichtquellenvorrichtung (3) nach Anspruch 1 oder Anspruch 2, wobei der Strahlteiler (16) ein reflektierender Spiegel ist, dessen Reflexionsvermögen derart eingestellt ist, dass ein Teil des einfallenden Lichts übertragen wird, ohne dass dieser Teil des einfallenden Lichts reflektiert wird.

4. Projektionsanzeigevorrichtung, umfassend eine Laserlichtquellenvorrichtung (3) nach einem der Ansprüche 1 bis 3, welche konfiguriert ist, um ein Bild auszustrahlen, welches auf einem Bildanzeigeelement (2) angezeigt wird, wobei Beleuchtungslicht von der Laserlichtquelle ausgegeben wird, und um Licht zu projizieren, welches durch das Bild moduliert wird, wenn das Licht durch ein optisches Projektionssystem (4) verstärkt wird.

## Revendications

1. Dispositif de source de lumière laser (3) comprenant :
une source de lumière laser (10, 11, 12) configurée pour combiner une pluralité de rayons laser d'une même couleur donnée, pour émettre un faisceau de rayons laser ;
un homogénéisateur (14) configuré pour supprimer ou réduire une cohérence du faisceau de rayons laser émis depuis la source de lumière laser (10, 11, 12) en modifiant aléatoirement le front d'onde du faisceau de rayons laser ;
un système optique (20) configuré pour émettre le faisceau de rayons laser qui a passé à travers l'homogénéisateur (14) ;
un séparateur de faisceau (16) disposé entre l'homogénéisateur (14) et le système optique (20) et configuré pour bifurquer une partie du faisceau de rayons laser qui est guidé depuis l'homogénéisateur (14) jusqu'au système optique, sous forme d'un faisceau de rayons laser de détection (LS) ;
un capteur optique (18) incluant une pluralité de photodétecteurs configurés pour recevoir le faisceau de rayons laser de détection (LS) bifurqué par le séparateur de faisceau (16) ; et
un contrôleur d'émission de lumière (25) configuré pour commander une émission de lumière de la source de lumière laser (10, 11, 12) sur la base de sorties de la pluralité des photodétecteurs du capteur optique (18) pour arrêter ou réduire une émission de lumière lorsqu'une sortie d'au moins un des photodétecteurs est supérieure à une valeur de seuil, le dispositif de source de lumière laser étant **caractérisé en ce que** ladite pluralité des photodétecteurs sont agencés de façon à être proches l'un de l'autre, le dispositif de source de lumière laser étant **caractérisé en outre en ce que** la sortie de chaque photodétecteur de ladite pluralité des photodétecteurs est comparée avec la valeur de seuil avant l'arrêt ou la réduction d'émission optique lorsqu'une sortie d'au moins un des photodétecteurs est supérieure à une valeur seuil, ou en outre **en ce que** le contrôleur d'émission de lumière est configuré pour commander une émission de lumière de la source de lumière laser sur la base de sorties de la pluralité des photodétecteurs du capteur optique pour arrêter ou de réduire une émission de lumière lorsqu'une différence entre des sorties de deux ou plusieurs des photodétecteurs est supérieure à une valeur prescrite.

2. Dispositif de source de lumière laser (3) selon la revendication 1, dans lequel le capteur optique (18) est une photodiode segmentée incluant la pluralité des photodétecteurs dans un seul boîtier.

3. Dispositif de source de lumière laser (3) selon la revendication 1 ou 2, dans lequel le séparateur de faisceau (16) est un miroir réfléchissant dont la réflectivité est réglée de façon à transmettre une partie de la lumière incidente sans réfléchir la partie de lumière incidente.

4. Appareil d'affichage par projection comprenant un dispositif de source de lumière laser (3) selon l'une quelconque des revendications 1 à 3, configuré pour irradier une image affichée sur un élément d'affichage d'image (2) avec de la lumière d'éclairage émise depuis la source de lumière laser et pour projeter de la lumière modulée par l'image en magnifiant la lumière par un système optique de projection (4).
